# EUROPEAN PATENT APPLICATION

(11) **EP 0 922 589 A1**
(43) Date of publication of application: **16.06.1999**
(21) Application number: 98309992.0
(22) Date of filing: 07.12.1998
(51) Int. Cl.: B41M 5/26, B23K 26/18, H01M 2/02, H01M 2/04

(54) **Method for printing thermoplastic materials using a laser**

(30) Priority: 10.12.1997 US 988498
(71) Applicant: TEKMAX INC., Tangent Oregon 97389 (US)
(72) Inventor: Johnson, David A., Corvallis, Oregon 97330 (US); Johnson, Peter E., Corvallis, Oregon 97330 (US)
(74) Representative: Croft, Michael John

(57) **Abstract**

A method for thermally printing on a dark thermoplastic material (16) with a color that is sufficiently contrasting to the color of the underlying material to make the printing clearly legible and thus be able to replace labels on products such as batteries, includes placing a layer (18) of similar thermoplastic coating material on top of the material prior to printing. A beam (26) of focused energy melts the surface of the underlying material (16) and the coating material (18) so that the coating material adheres to the underlying material to form a contrasting color layer. The excess coating material that is not adhered is then removed. Alternatively, rather than placing contrasting color coating plastic material over the material that is to be printed on, the material can first be coated with a substance which alters its characteristics when melted so that the color of the material when melted is sufficiently different from its normal color to provide the necessary contrast.

## Description

### BACKGROUND AND SUMMARY OF THE INVENTION

This invention relates to a method for thermal printing on thermoplastic material.

It is difficult to print on many plastic materials. As a result, there are products made from these materials that must have labels adhered to them. An example is lead acid storage batteries of the type used in the automotive, marine and agricultural industries. Batteries typically have cases made from polypropylene. A battery manufacturer often makes batteries that are sold under many different brand names, and for each brand there are batteries of different quality, and for each brand and quality there are many sizes. All this information must be stated on the battery. Since it is difficult to print on polypropylene, the manufacturer places this information on labels which are adhered to the batteries. This means that the manufacturer must keep a very large inventory of labels on-hand so that labels are available for every brand, quality and size combination. Furthermore, because of the difficulty of adhering labels to polypropylene, these labels are quite expensive.

Laser thermal printing machines can be programmed to print directly on a product, including thermoplastic products, and thus overcome the need to keep an inventory of multiple labels in many applications. However, heretofore thermal printing machines have not been able to create sufficiently visible printing on batteries and other thermoplastic products. When thermoplastic material is thermally printed, its surface is melted. This melting process turns the plastic a dark gray color which will provide enough contrast to see the printed pattern when the material is white or a very light color but not when the material is black or a dark color. Batteries, and many other products made from plastic material, are black so thermal printing has not been available to eliminate the label inventory problems for these products. Moreover, the color of the printing is limited to whatever occurs when a particular thermal printing machine is used to print on a particular material.

The subject invention overcomes the problems with there not being enough contrast between the printing and the background for thermal printing to be sufficiently visible.

In its broadest aspect the subject invention provides a method for printing a pattern on the surface of a thermoplastic material comprising:
(a) placing on said surface a layer or coating of a material which is such that in response to heating of a desired part or parts of said surface it causes the formation of a pattern of a contrasting color on said part or parts of the surface; and
(b) using a directionally controlled source of focused energy to heat a desired part or parts of said surface according to the pattern required.

In one preferred embodiment the area to be printed is first covered with a thin layer of a similar thermoplastic coating material having a color that is contrasting to the color of the underlying material. A directionally controlled source of focused energy is then used to print on the underlying material. The energy source raises the temperature of the underlying material and coating sufficiently to locally melt them so that the coating material adheres to the underlying material to provide the desired color overlay. The excess top layer is removed and possibly recycled. The coating can either be a ground material, an emulsion or a transfer film. With ground material the particle size preferably is less than 0.004 inches.

This method works particularly well with polyolefins, such as polypropylene which is typically used to manufacture battery cases.

In an alternative embodiment, rather than placing a thermoplastic material over the portion of the material that is to be printed, it is first coated with a substance that alters the manner in which the underlying material melts so that the color of the melted material will be enough different from the original color that there is sufficient contrast. This can be almost any liquid, but water and kerosene are known to work for this purpose.

The foregoing and other objectives, features, and advantages of the invention will be more readily understood upon consideration of the following detailed description of preferred embodiments of the invention, taken in conjunction with the accompanying drawings.

### BRIEF DESCRIPTION OF THE DRAWINGS

FIGURE 1 is a perspective view of a storage battery showing the placement of labels that are made by the method of the subject invention.
FIGURE 2 is a plan view of a piece of plastic material which is prepared for printing according to the method of the subject invention.
FIGURE 3 is a side elevation view of a piece of material being printed according to the subject invention.
FIGURE 4 is a plan view of a piece of material that has been printed according to the subject invention.
FIGURES 5a-e are sectional views taken along the line 5-5 of FIGURE 4.
FIGURE 6 is a sectional view, similar to FIGURE 5, showing an alternative method of printing.

### DETAILED DESCRIPTION OF THE PREFERRED EMBODIMENT

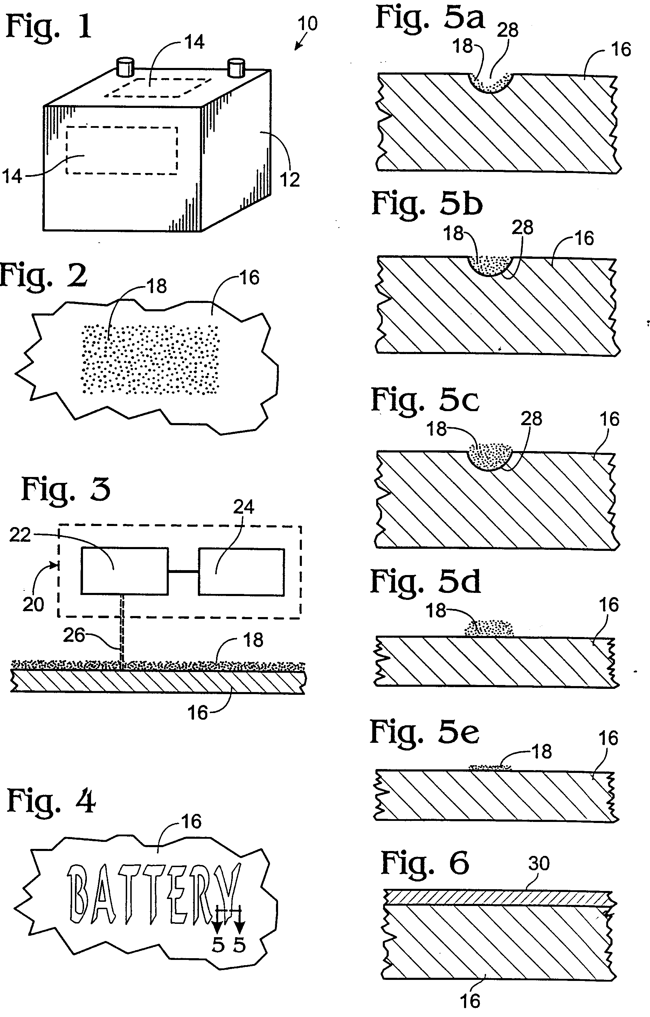

The method of the subject invention provides the contrast necessary to make thermal printing easily readable when thermal printing is performed on a thermoplastic material which normally would not provide sufficient contrast when thermally printed. Referring now to FIGURE 1, an example of such printing is a battery 10 having a case 12 which is made from polypropylene and has printed material 14 on its side and top. Typically, battery cases are black and the printing must be white, or a light color, to provide sufficient contrast.

Referring now also to FIGURES 2-5, the subject invention provides contrast when a thermoplastic material 16 is thermally printed by first placing a thermoplastic coating material 18, that will adhere to the underlying material when melted, over the area in which the printing is to be placed. This coating material generally will be the same material as the underlying material, but in some instances it is preferable to use another material. The coating material has a color that will contrast well with the underlying material 16. The coating material can be in the form of a finely ground powder, which is shown in the drawings. Alternatively, the coating material can be mixed in a liquid emulsion which is painted on the underlying material. The coating material also could be in the form of a transfer film which is adhered to the surface of the underlying material. If a ground material is used it must have a small particle size in order to give a smooth finish. Preferably, the particles should be less than 0.004 inches. Larger particles tend to disrupt the finish.

A thermal printing machine 20, that typically utilizes a laser 22 with a steerable beam 26 which is programmed through a microprocessor based controller 24 to print a pattern on a thermoplastic material, is then used to print the appropriate pattern in the underlying material through the coating material 18. Machines which will perform this function are well known and are commercially available. With some kinds of lasers, such as a YAG Laser, the laser emits a focused light beam 26 which melts the underlying material in the desired pattern. The melting creates a depression 28 in the underlying material. With a light coating material and dark underlying material, the laser does not heat the coating material as much as it heats the underlying material. As the temperature of the underlying material is raised to the point where melting occurs, which is necessary to create the depression 28, the underlying material radiates enough energy back to the coating material to cause it to melt. The coating material then becomes adhered to the underlying material when the materials cool. Thus, a coating of the contrasting color coating material overlies the underlying material thereby making the printing be in the color of the coating material. Depending on the materials and how much energy is applied by the laser, the coating material can line the depression, FIGURE 5a, the coating material can fill the depression, FIGURE 5b, or the coating material can project above the depression, FIGURE 5c.

With other types of lasers, such as a CO₂ laser, the laser beam directly melts both the coating material and the surface of the underlying material, and the coating material is adhered to the surface of the underlying material without a depression being formed in the underlying material, as shown in FIGURES 5d and 5e. In either case, once the printing is completed the remainder of the coating material is removed from the surface. If the coating material is a ground material, the removed material can be recycled.

The subject invention allows almost any color printing to be placed on any color background and even allows multi-color printing.

Since melting of the underlying material turns it dark gray, some contrast is possible even without first placing the coating material on the underlying material. However, the gray color of the melted material does not provide sufficient contrast with anything but a very light colored underlying material. As an alternative to using a contrasting colored coating material which adheres to the underlying material, applying a liquid coating 30, FIGURE 6, will change the melting characteristics of the underlying material 16 to make it lighter than its original color when it is melted. The liquid coating condenses the melted plastic and form bubbles which appear to have a light color.

The terms and expressions which have been employed in the foregoing specification are used therein as terms of description and not of limitation, and there is no intention, in the use of such terms and expressions, of excluding equivalents of the features shown and described or portions thereof, it being recognized that the scope of the invention is defined and limited only by the claims which follow.

## Claims

1. A method for printing a pattern on the surface of a thermoplastic material comprising:
(a) placing on said surface a layer or coating of a material which is such that in response to heating of a desired part or parts of said surface it causes the formation of a pattern of a contrasting color on said part or parts of the surface; and
(b) using a directionally controlled source of focused energy to heat a desired part or parts of said surface according to the pattern required.

2. A method for printing on the surface of a thermoplastic material comprising:
(a) placing a layer of a similar thermoplastic coating material having a contrasting color on said surface;
(b) using a directionally controlled source of focused energy to burn a desired pattern in said surface; wherein
(c) said source of energy is sufficient to melt the portion of said surface and coating material corresponding to the desired pattern so that said coating material adheres to said surface over the extent of the pattern.

3. The method of Claim 2, including the further step of removing any excess coating material that is not adhered from said surface.

4. The method of Claim 2 wherein the material is a polyolefin.

5. The method of Claim 2 wherein the material is polypropylene.

6. The method of Claim 2 wherein the coating material is ground material.

7. The method of Claim 6 wherein the ground material has a particle size of less than 0.004 inches.

8. The method of Claim 2 wherein the coating material is an emulsion which is applied to the surface.

9. The method of Claim 2 wherein the coating material is a transfer film which is laid on the surface.

10. The method of Claim 2 wherein the source of energy is a YAG Laser.

11. The method of Claim 2 wherein the source of energy is a CO₂ laser.

12. A method for printing a pattern on the surface of a thermoplastic material comprising:
(a) placing on said surface a coating of a substance that alters the melting characteristics of said thermoplastic material so that the color of said thermoplastic material changes when it is melted; and
(b) using a directionally controlled source of focused energy to burn the desired pattern in said surface.

13. The method of Claim 12 wherein the coating material is a liquid which modifies the melting characteristics of the underlying material.

14. The method of Claim 12 wherein said coating material is water.

15. The method of Claim 12 wherein said coating material is kerosene.
